Europäisches Patentamt

European Patent Office

Office européen des brevets

(19)

(11) Veröffentlichungsnummer: **0 057 851**
**B1**

(12)

# EUROPÄISCHE PATENTSCHRIFT

(45) Veröffentlichungstag der Patentschrift:
**03.06.87**

(51) Int. Cl.⁴: **G 01 K 17/06, G 01 K 17/14**

(21) Anmeldenummer: **82100542.8**

(22) Anmeldetag: **27.01.82**

(54) **Vorrichtung zur Bestimmung der Verteilung von Heiz- und Warmwasserkosten sowie Heizkostenverteiler dafür.**

(30) Priorität: **30.01.81 DE 3103102**

(43) Veröffentlichungstag der Anmeldung:
**18.08.82 Patentblatt 82/33**

(45) Bekanntmachung des Hinweises auf die Patenterteilung:
**03.06.87 Patentblatt 87/23**

(84) Benannte Vertragsstaaten:
**AT BE CH DE FR GB IT LI LU NL SE**

(56) Entgegenhaltungen:
**CH - A - 155 156**
**CH - A - 390 574**
**DE - A - 1 964 460**
**DE - C - 834 760**
**DE - C - 888 680**
**US - A - 2 689 684**
**US - A - 3 417 616**
**US - A - 4 118 979**

(73) Patentinhaber: **MINOL Messtechnik W. Lehmann KG.,
Gutenbergstrasse 4,
D-7022 Leinfelden-Echterdingen 2 (DE)**

(72) Erfinder: **Hopf, Wolfgang, Ahornweg 3,
D-7251 Wimsheim (DE)**

(74) Vertreter: **Becker, Maria, Dipl.-Phys., Auf dem Haigst 29,
D-7000 Stuttgart 70 (DE)**

**Beschreibung**

Die Erfindung betrifft einen Heizkostenverteiler gemäss dem Oberbegriff des Anspruchs 1.

Ein Heizkostenverteiler dieser allgemeinen Art ist beispielsweise aus der CH-A-390 574 bekannt.

Weiterhin ist aus der DE-C-834 760 eine Wärmemesseinrichtung bei Heizanlagen mit Umwälzpumpe zum Messen einer Temperaturdifferenz über ein Differentialgetriebe mit Verstellen einer Nockenscheibe proportional zur Emperaturdifferenz bekannt, die gegenüber einer zweiten Nockenscheibe verstellbar ist, wobei die beiden Nockenscheiben eine gemeinsame Lücken bilden, die bei ständiger Abtastung ein Mass für die verbrauchte Wärmemenge hergibt.

Bei der Aufteilung der Heiz- und Warmwasserkosten in zentral- und fernbeheizten Gebäuden stützt man sich üblicherweise auf ein Hilfsmessverfahren mit sogenannten Heiz- bzw. Warmwasserkostenverteilern. Dies sind einfache Apparaturen, in denen sich ein mit einer Verdampfungsflüssigkeit gefülltes Röhrchen befindet. Der Heizkostenverteiler wird so am Heizkörper befestigt, dass das Röhrchen eine mittlere Heizkörpertemperatur annimmt. Die Verdampfungsgeschwindigkeit der Flüssigkeit ist in grober Näherung eine Funktion der Temperatur. Die verdampfte Menge ist infolgedessen eine Funktion des zeitlichen Temperaturintegrals. Die Messwerterfassung geschieht durch Ablesen des Flüssigkeitsspiegels an einer über die Länge des Röhrchens verlaufenden Skala der Apparatur. Die abgegebene Wärmemenge errechnet sich durch Multiplikation mit einem für jeden Heizkörpertyp und seine Grösse spezifischen Leistungsfaktor.

Dieses im Prinzip einfache Messverfahren weist andererseits einige wesentliche Nachteile auf, die den Anwendungsbereich einschränken und die Handhabung aufwendig machen. Dazu gehören im wesentlichen:

Die Nichtlinearität infolge der Veränderung der Zusammensetzung der Verdampferflüssigkeit im Laufe der Zeit;

die Beeinflussung des Messergebnisses durch geringe Lageänderungen des Röhrchens;

die grosse subjektive Ablesefehlermöglichkeit;

die umständliche Ablesung an schwer zugänglichen Stellen;

keine Möglichkeit der Messwertfernübertragung z.B. für die zentrale Datenerfassung;

das jährlich erforderliche Auswechseln des Röhrchens;

die Manipulierbarkeit des Messergebnisses durch Verzögerung der Verdampfung;

Verfälschung der Anzeige durch Wärmestau;

die Abfallbeseitigung der z.T. giftige Bestandteile enthaltenden Restflüssigkeit;

die Bruchgefahr des Röhrchens;

die fehlende Möglichkeit der Differenztemperaturmessung.

Der Erfindung liegt daher die Aufgabe zugrunde, einen preisgünstigen und für eine Massenfertigung geeigneten Heizkostenverteiler mit Temperaturintegration für eine Heiz- und Warmwasserkostenverteilung der im Oberbegriff des Anspruchs 1 genannten Art zu schaffen, welcher hinreichend genau bequem ablesbar bzw. auswertbar und gegen Manipulierbarkeit sicher ist.

Dies wird erfindungsgemäss durch die im Anspruch 1 im kennzeichnenden Teil aufgezeigten Merkmale erreicht. Weitere Ausgestaltungen der Erfindung sind den weiteren Ansprüchen zu entnehmen.

Die Erfindung nutzt die Temperaturmessung mit mechanischen Temperaturfühlern wie Dehnstofftemperaturfühlern oder Bimetalltemperaturfühlern. Diesen ist gemeinsam, dass zur Temperaturmessung der Ausdehnungskoeffizient von Stoffen ausgenutzt wird; der Ausdehnungskoeffizient ist im interessierenden Temperaturbereich zwischen 20 °C und 100 °C hinreichend linear. Das Temperatursignal solcher Fühler ist eine Weg- oder Winkeländerung eines mechanischen Bauteils. Diese Weg- oder Winkeländerung wird periodisch abgetastet (gemessen) und fortlaufend in einem Zählwerk summiert. Dort kann es bequem numerisch abgelesen und mit einem für die jeweilige Messstelle vorgegebenen Leistungsfaktor, welcher die Heizkörpergrösse und -bauart berücksichtigt, multipliziert und in die Heizkostenabrechnung eingegeben werden. Die Multiplikation mit dem Leistungsfaktor kann aber mit Vorteil auch schon vor dem Summieren der Abtastsignale im Zählwerk erfolgen, sei es dadurch, dass die Abtastperiode entsprechend kurz oder lang gewählt wird, sei es durch Einstellung eines Anpassungsgetriebes bei Verwendung mechanischer Zählwerke.

Die benötigten mechanischen Temperaturfühler sind einfach und preiswert herzustellen und darüberhinaus alterungsbeständig, zuverlässig und wartungsfrei. Auch entzieht sich die Wärmedehnung des Temperaturfühlers sehr weitgehend der Manipulation zum Zweck der Erniedrigung des Messwertes, denn die Messstelle selbst kann abgeschirmt und verplombt werden. Entsprechendes gilt für das Zählwerk.

Die Verwendung eines Zählwerks erlaubt auch die Messwertfernübertragung zu einer Datensammelstation. Zählwerke, die sich dazu eignen, zum Zwecke der Fernübertragung des Zählwerkstandes abgefragt zu werden, sind Stand der Technik.

Als Zählwerke werden zweckmässig mechanische Zählwerke verwendet, da sie sehr zuverlässig und preiswert sind. Bei mechanischen Zählwerken und mechanischer Abtastung lässt sich auch mit Vorteil für die Abtasteinrichtung und für das Zählwerk ein gemeinsamer Antrieb verwenden. Bei Verwendung eines batteriegespeisten Zählwerkantriebs lassen sich Batterielebensdauern von mehr als einem Jahr ohne weiteres erzielen.

Ein Unterbrechen oder Blockieren des Antriebs der integrierenden Vorrichtung bei elektrischem Antrieb z.B. durch Unterbrechen der Stromversorgung, kann dadurch überwacht werden, dass man ein Hilfszählwerk vorsieht, welches die Gesamteinschaltdauer der Vorrichtung registriert. Auf diese Weise lassen sich sowohl unzulässige Manipulationen als auch ein Defekt aufdecken.

Durch Verwendung von zwei gleichartigen mechanischen Temperaturfühlern, deren Temperatursignale durch eine gemeinsame Abtasteinrichtung abgetastet werden, lässt sich ohne grossen zusätzlichen Aufwand auch eine Temperaturdifferenz integrieren, z.B. die Differenz zwischen der Heizkörpertemperatur und der Raumtemperatur, wodurch sich der Wärmeverbrauch wesentlich genauer ermitteln lässt.

Bewohner von Räumen, in denen solche Vorrichtungen installiert sind, welche eine Differenztemperaturintegration ermöglichen, könnten versucht sein, das Messergebnis dadurch zu manipulieren, dass sie die Messstelle für die Raumtemperatur (Vergleichsmessstelle), welche üblicherweise kälter ist als der Heizkörper, künstlich erwärmen, um auf diese Weise die von den beiden Temperaturfühlern gemessene Temperaturdifferenz zu verkleinern.

Um dem zu begegnen, kann man vorsehen, die Einschaltdauer der Vorrichtung mittels eines gesonderten Zählwerks, welches dasselbe Zählwerk sein kann, welches oben erwähnt wurde, zu registrieren und gleichzeitig einen Schwellwertschalter für dieses Zählwerk vorzusehen, über welchen das Zählwerk immer dann abgeschaltet wird, wenn die Temperatur der Vergleichsmessstelle einen vorwählbaren Grenzwert überschreitet. Für diesen Grenzwert wählt man eine Temperatur, welche üblicherweise als Raumtemperatur nicht erreicht wird, zum Beispiel 30 °C. Werden bei der jährlichen Zählerablesung Abschaltungen festgestellt, so deutet dies auf Manipulation hin.

Ein weiterer Vorteil der Erfindung liegt darin, dass die integrierende Vorrichtung nicht unbedingt an der Messstelle (am Heizkörper) angebracht sein muss. Vielmehr kann z.B. bei Verwendung eines Dehnstoff-Temperaturfühlers eine Kapillare vom Messort zu einer bequem zugänglichen Stelle geführt werden, an welcher sich der Integrator befindet.

Soll die Vorrichtung jedoch unmittelbar am Messort befestigt werden, so verwendet man als Temperaturfühler am zweckmässigsten einen Bimetalltemperaturfühler, welcher bei kleinsten Abmessungen grosse Auslenkungen ermöglicht, welche sich bequem mechanisch abtasten lassen.

Bei Verwendung von Temperaturfühlern, welche auf eine Temperaturänderung mit einer Winkeländerung reagieren, sind vorzugsweise zwei Kulissen oder Nockenscheiben vorgesehen, welche gemeinsam abgetastet werden. Die eine Kulisse ist mit dem Temperaturfühler verbunden und macht dessen Winkeländerung mit. Die andere Kulisse ist gemgegenüber während der Temperaturmessung unverdrehbar und repräsentiert eine Ausgangstemperatur, während die Länge der Kulissenausschnitte (der Umfangsbereiche mit dem kleineren Radius) den Messbereich bestimmt. Die beiden Kulissen und ihre Ausschnitte werden so angeordnet und justiert, dass unterhalb einer unteren Grenztemperatur, z.B. unterhalb von 30 °C, der Arm der Abtasteinrichtung in keine der beiden Kulissenausschnitte eintauchen kann, so dass das Zählwerk blockiert ist. Erst oberhalb dieser Grenztemperatur kann der Arm in beide Ausschnitte eintauchen, wobei der Winkel, den er bei der Abtastung darin überstreichen kann, mit steigender Temperatur bis zum oberen Ende des Messbereichs zunimmt. Bei konstanter Abtastgeschwindigkeit ist daher die Dauer des Eintauchens des Arms in die Kulissenausschnitte und damit auch die Dauer der Freigabe des Zählwerks der Temperatur proportional, so dass bei konstanter Zählrate die Zunahme des Zählerstandes je Abtastperiode der Temperatur proportional ist.

Die periodische Abtastung erzielt man am einfachsten, indem man den Arm der Abtasteinrichtung so antreibt, dass er die Kulissen periodisch umrundet, wobei durch Verstellung der Drehzahl ein Leistungs- oder Eichfaktor berücksichtigt werden kann.

Bei Verwendung eines mechanischen Zählwerks kann man dieses am einfachsten dadurch steuern, dass man den Arm der Abtasteinrichtung auf ein Zahnrad des Zählwerkgetriebes einwirken lässt, am besten in der Weise, dass der Arm dann, solange er in die beiden Ausschnitte der Kulissen eintaucht, auch in das Zahnrad eintaucht und es um denselben Winkel mitnimmt, den der Arm in den Kulissenausschnitten zurücklegt, so dass die Zählerfortschaltung je Abtastperiode diesem Winkel proportional ist. Der Zählerantrieb erfolgt auf diese Weise mittelbar durch den Antrieb des Arms der Abtasteinrichtung.

Will man eine Differenztemperatur messen, so benötigt man einen zweiten gleichartigen Temperaturfühler, welcher dieselbe Abhängigkeit des Winkels von der Temperatur aufweist wie der erste Temperaturfühler. Dem zweiten Temperaturfühler wird in entsprechender Weise eine eigene Kulisse zugeordnet, welche koaxial zur Kulisse des ersten Temperaturfühlers angeordnet ist. Diese Kulisse des zweiten Temperaturfühlers kann die oben beschriebene «voreinstellbare» Kulisse sein, wobei deren Voreinstellung eben durch die Temperatur an der Vergleichsmessstelle erfolgt, welche die Basis der zu messenden und zu integrierenden Temperaturdifferenz bildet. Es kann aber auch eine dritte Kulisse vorgesehen werden, welche mit dem zweiten Temperaturmessfühler in entsprechender Weise wie die erste Kulisse mit dem ersten Temperaturfühler verbunden wird.

Mit Vorteil ist der grosse Radius ($R_5$) der feststehenden Kulisse etwas grösser als der grosse Radius ($R_4$) der am Temperaturfühler befestigten Kulisse, weil dann bei jedem Abtastzyklus die am Temperaturfühler befestigte Kulisse belastungsfrei eine der jeweiligen Temperatur entsprechende Stellung einnehmen kann, solange der abtastende Arm den Sektor der feststehenden Kulisse mit dem grossen Radius ($R_5$) überstreicht. Bei einer anderen Anordnung hingegen drückt der abtastende Arm die am Temperaturfühler befestigte Kulisse zeitweise gegen den Ansatz der Wärmebrücke und arretiert dadurch diese Kulisse durch Reibung, so dass diese durch die Abtastbewegung des Arms nicht mitgenommen wird.

Der Temperaturfühler wird zweckmässig wärmestrahlungsgeschützt in einem Gehäuse untergebracht. Bei Verwendung von Bimetallspiralen als Temperaturfühler werden diese vorzugsweise in ein solches wärmeabschirmendes Gehäuse eingebracht und mit ihrem äusseren Ende daran befestigt, während das innere Ende an der Wärmebrücke befestigt wird, so dass die Spirale deren Temperatur annehmen kann. Die zugehörige Kulisse wird bevorzugt auf dem Mantel dieses Gehäuses angeordnet.

Wird anstelle eines Temperaturfühlers, der auf eine Temperaturänderung mit einer Winkeländerung antwortet, ein solcher verwendet, der mit einer Längenänderung antwortet, so kann man diese Längenänderung entweder über Lenker in eine Winkeländerung überführen und dann wie beschrieben abtasten oder man kann die Längenänderung unmittelbar abtasten, und zwar z.B. elektrisch oder optisch, vorzugsweise aber mechanisch, und mit der Längenänderung periodisch ein Zählwerk ansteuern. Dazu geeignete Zählwerke sind Stand der Technik.

Der Antrieb für die ständige Kulissenabtastung ist in der einfachsten Ausführung mit einem elektrisch betriebenen Uhrwerksmotor realisierbar. Wird ein batteriebetriebener Motor verwendet, so kann bei angemessener Batteriekapazität von einer mindestens 5-jährigen Laufzeit ohne Batteriewechsel ausgegangen werden. Ausserdem besteht die Möglichkeit, mit einem vom mechanischen Temperaturgeber betätigten Schalter das Laufwerk unterhalb einer Minimaltemperatur zur Batterieschonung abzuschalten.

Eine andere Antriebsalternative ist ein herkömmliches Federwerk mit automatischem Aufzug. Die Aufzugsenergie wird aus der Wärmeenergie des Heizkörpers über einen thermomechanischen Wandler (Bimetall- oder Dehnstoffelement) gewonnen. Dieser thermomechanische Wandler bewegt sich durch seine eigene Formänderung (Weg oder Winkel) zwischen zwei Wärmekontaktstellen unterschiedlicher Temperatur hin und her. Die eine Wärmekontaktstelle ist zweckmässig die ohnehin vorhandene Wärmebrücke, die andere Wärmekontaktstelle ist temperaturseitig mit einem Körper verbunden, der annähernd Raumtemperatur hat.

Dies kann z.B eine Metallplatte sein, die der Verbrauchsstelle, z.B. dem Heizkörper abgewandt und frei liegt und zum Heizkörper hin gut isoliert ist. Der thermische Arbeitspunkt, das ist die Mittentemperatur zwischen den Temperaturen der beiden Wärmekontaktstellen, kann in den meisten Fällen in guter Näherung bei 30 °C angenommen werden. Der thermomechanische Wandler ist auf eine entsprechende Arbeitstemperatur einzustellen. Eine zu starke Verschiebung des Arbeitspunktes durch Änderung der Temperaturverhältnisse an den Wärmekontaktstellen kann die Funktion des thermomechanischen Wandlers beeinträchtigen. Dem kann man mit Vorteil dadurch begegnen, dass der Arbeitspunkt durch einen oder mehrere weitere thermomechanische Wandler, welche auf die Temperatur der Wärmekontaktstellen ansprechen, nachgestellt wird. Bei Verwendung einer Bimetallspirale als thermomechanischen Wandler für das Aufziehen des Federwerks, wobei diese Spirale mit ihrem inneren Ende an einer Welle befestigt ist und am äusseren Ende den hin- und hergehenden Wärmekontakt trägt, verwendet man zum Nachstellen des Arbeitspunktes der Bimetallspirale z.B. eine koaxial dazu angeordnete zweite Bimetallspirale, deren äusseres Ende festgelegt ist und deren inneres Ende an der Welle befestigt ist und diese bei Temperaturänderungen entsprechend verdreht und damit auch die Bimetallspirale für den Aufzug des Federwerks verdreht.

Zur Sicherstellung ausreichender Gangreserven kann das Federwerk unterhalb einer minimalen Heizkörpertemperatur blockiert werden und zwar kann dies mit Vorteil durch denselben thermomechanischen Wandler geschehen, welcher gleichzeitig zum Nachstellen des Arbeitspunktes vorgesehen ist.

Vorzugsweise dient als Wandler eine Bimetallspirale, deren freies Ende zwischen zwei Wärmekontaktstellen unterschiedlicher Temperatur oszilliert (Anspruch 26), wobei die Kontaktgabe in den beiden Endlagen durch eine auf den Wärmekontakt am beweglichen Ende der Spirale einwirkende Druckfeder, z.B. eine Wendelfeder, unterstützt wird, welche zusammen mit der Spirale eine Schnappschaltung bildet. Die oszillierende Bewegung des Wärmekontakts kann in einer aus der Uhrwerkstechnik bekannten Weise dazu ausgenutzt werden, um über ein Gesperre auf das Spannrad der Zugfeder des Federwerks einzuwirken.

Die erfindungsgemässe Vorrichtung eignet sich für eine Vielzahl von Anwendungen, vor allem für:
– Heiz- oder Warmwasserkostenverteiler mit direktwirkendem Temperaturfühler und Registrierung am Messort;
– Heiz- oder Warmwasserkostenverteiler, installiert an beliebigem, gut zugänglichem Ort, mit Fernfühler an der Messstelle;
– Heizkostenverteiler mit direktwirkenden Differenztemperaturfühlern und Registrierung am Messort;
– Heizkostenverteiler mit direktwirkendem Heizkörpertemperaturfühler und Referenztemperaturfernfühler, mit Registrierung am Messort;
– Heizkostenverteiler mit Heizkörpertemperaturfernfühler und direktwirkendem Referenztemperaturfühler, mit Registrierung an der Referenztemperaturmessstelle;
– Heizkostenverteiler, mit Fernfühlern für Heizkörpertemperatur und Referenztemperatur, installiert an beliebigem, gut zugänglichem Ort.

Ein bevorzugtes Ausführungsbeispiel der erfindungsgemässen Vorrichtung ist in den beigefügten Zeichnungen schematisch dargestellt und wird nachfolgend beschrieben.

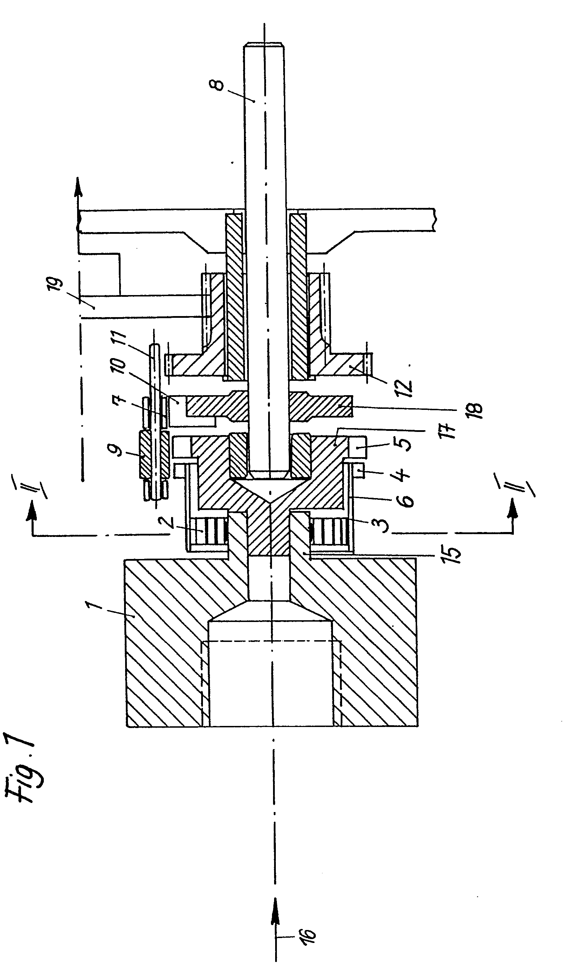

Figur 1 zeigt die Ansicht eines längs geschnittenen Heizkostenverteilers mit Bimetallspirale,

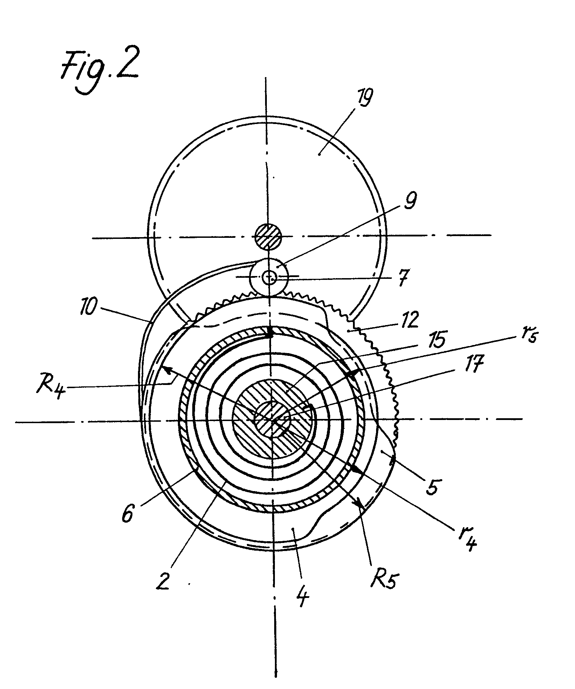

Figur 2 zeigt die Schnittansicht II–II gemäss Figur 1, und

Figur 3 zeigt einen thermomechanischen Wandler zur Verwendung in einem solchen Heizkostenverteiler.

Bei dem dargestellten Heizkostenverteiler wurde auf die Wiedergabe des Zählers und des Laufwerks verzichtet, da beide für sich genommen dem Stand der Technik angehören.

Eine Wärmebrücke 1 überträgt die Temperatur eines Verbrauchers, z.B. eines Heizkörpers, direkt auf den als Bimetallspirale ausgeführten mechanischen Temperaturfühler 2. Die Bimetallspirale 2 ist mit ihrem innen liegenden Ende unverschieblich auf einem hohlzylindrischen Ansatz 15 der Wärmebrücke 1 befestigt und ist wärmestrahlungsgeschützt in einem zylindrischen Gehäuse 6 untergebracht, das am freien, sich bewegenden Ende 3 der Bimetallspirale befestigt ist und gleichzeitig auf ihrem Mantel eine ringförmige Kulisse 4 (Nockenscheibe) trägt. Der gesamte Messtemperaturbereich überstreicht einen Kulissenwinkel von ca. 120°, d.h. die Kulisse 4 besitzt über einen Umfangswinkel von 120° einen kleineren Radius $r_4$ als über den verbleibenden Umfangswinkel von 240°, wo der grössere Radius $R_4$ vorliegt. Steigende Temperatur bewegt die Kulisse 4 bei Blickrichtung in Richtung des Pfeils 16 entgegen dem Uhrzeigersinn. Eine feste, ringförmige Kulisse 5 mit ebenfalls 120° Kulissenwinkel (d.h. die Kulisse 5 besitzt über einen Umfangswinkel von 120° einen kleineren Radius $r_5$ als über den verbleibenden Umfangswinkel von 240°, wo der grössere Radius $R_5$ vorliegt) ist mittels eines in den Ansatz 15 gesteckten Trägers 17 mit festem Sitz in der Wärmebrücke 1 verankert. Sie ist hinsichtlich ihrer Winkellage so eingestellt, dass sich unterhalb einer vorwählbaren minimalen Messtemperatur zusammen mit der beweglichen Kulisse 4 ein geschlossener Kreis mit den Radien $R_4$ und $R_5$ entsprechend der «Aus»-Stellung bildet, in welcher das zugehörige Zählwerk blockiert werden soll. Der grössere Radius $R_5$ der feststehenden Kulisse ist grösser als der ($R_4$) der beweglichen Kulisse 4, so dass die bewegliche Kulisse 4 während jeden Umlaufes eines die Kulissen 4, 5 abtastenden Armes 7 eine der Temperatur entsprechende Stellung drehmomentfrei einnehmen kann. Für die Kulissenradien gilt die Bezeichnung

$$r_4 < r_5 < R_4 < R_5.$$

Der Arm 7 wird mittels einer angetriebenen Welle 8 bei Blickrichtung in Richtung des Pfeils 16 im Uhrzeigersinn bewegt. Der achsparallel zu den Kulissen 4, 5 angeordnete Arm 7 ist am einen Ende einer Blattfeder 10 befestigt, deren anderes Ende am Umfang eines drehfest mit der Welle 8 verbundenen Rades 18 befestigt ist. Auf dem Arm 7 ist frei drehbar eine Walze 9 gelagert, welche von der Blattfeder 10 leicht gegen die beiden Kulissen 4 und 5 gedrückt wird. Die Walze 9 wird zunächst über die grössere feststehende Kulisse 5 geführt und trifft von hier bei weiterer Drehung des Arms 7 auf die «Aus»-Fläche (Radius $R_4$) der beweglichen Kulisse 4, die wiederum radial leicht gegen den Träger 17 der feststehenden Kulisse 5 gedrückt und damit arretiert wird. Bei geöffnetem Kulissenwinkel, d.h. wenn die Umfangsabschnitte mit den kleineren Radien $r_4$ und $r_5$ wenigstens

teilweise fluchten, taucht die Walze 9 bei weiterer Drehung in die fluchtenden Ausschnitte (Radien $r_4$ und $r_5$) («Ein»-Stellung) der Kulissen 4 und 5. Dabei taucht der über die Blattfeder 10 hinaus verlängerte Arm 9 mit seinem als Mitnehmer wirkenden verlängerten Endabschnitt 11 in die dafür vorgesehene feine Verzahnung eines Kupplungszahnrades 12 ein, das über den gemeinsamen «Ein»-Winkel der Kulissen 4 und 5 bei weiterer Drehung der Welle 8 mitgenommen wird. An der durch die feste Kulisse 5 bestimmten Minimaltemperaturstelle taucht der Mitnehmer 11 wieder aus dem Kupplungszahnrad 12 auf. Das Kupplungszahnrad 12 ist frei drehbar auf der Welle 8 gelagert. Es ist das erste Zahnrad eines Getriebes, von welchem noch ein weiteres Zahnrad 19 angedeutet ist, über welches ein mechanisches Rollenzählwerk antreibbar ist. Der entsprechend der Temperaturhöhe unterbrochen fortschreitende Drehwinkel des Kupplungszahnrades 12 wird über das Getriebe auf das Rollenzählwerk übertragen.

In Erweiterung dieser einfachsten Form des Heizkostenverteilers kann durch Hinzufügen einer weiteren temperaturabhängigen Kulisse die Differenztemperaturintegration z.B. unter Berücksichtigung der Raumtemperatur bei der Heizkostenverteilung durchgeführt werden.

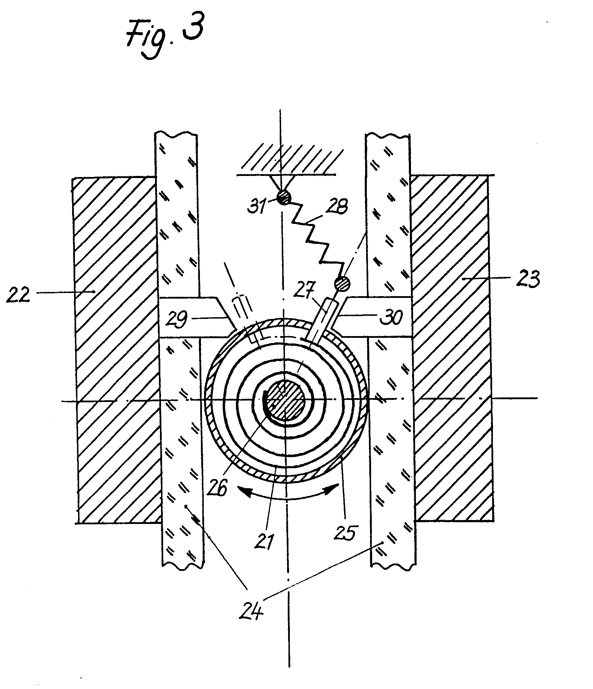

Für den Antrieb der Welle 8 und damit für den Antrieb des abtastenden Arms 7 und des Zählwerks eignet sich ein Federwerk mit Selbstaufzug, wobei in vorteilhafter Weise die Aufzugsenergie der Wärme der Wärmeverbrauchsstelle, deren Temperatur registriert werden soll, entnommen werden kann. Einen dazu geeigneten thermomechanischen Wandler zeigt schematisch die Fig. 3.

Er besteht im wesentlichen aus einer Bimetallspirale 21, welche zwischen einer Raumtemperaturwärmebrücke 23 und einer Heizkörpertemperaturwärmebrücke 22 angeordnet ist. Diese drei Elemente 21 bis 23 sind durch thermisch isolierende Wände 24 und ein die Spirale 21 umgebendes Gehäuse 25 thermisch gut gegeneinander isoliert. Die Bimetallspirale ist an ihrem inneren Ende mit einem Widerlager 26 fest verbunden. An ihrem freien Ende trägt sie einen Wärmekontakt 27. Mittels einer Schnappschaltung kann der Wärmekontakt 27 als Endlagen nur jene beiden Lagen einnehmen, in welchen er einer der beiden Anschläge 29 bzw. 30 anliegt, welche wärmeleitend mit der Raumtemperaturwärmebrücke 23 bzw. der Heizkörpertemperaturwärmebrücke 22 durch die isolierenden Wände 24 hindurch verbunden sind. Die Schnappschaltung ist verwirklicht mittels einer Druckfeder 28, welche mit ihrem einen Ende am Wärmekontakt 27 angelenkt und mit ihrem anderen Ende an einem Widerlager 31 befestigt ist, welches auf der Winkelhalbierenden des maximalen Schwenkwinkels des Wärmekontakts 27 liegt. Der Schaltpunkt der Schnappschaltung liegt bei ungefähr 30 °C.

Im Ausgangszustand liegt der Wärmekontakt 27 infolge der kalten Bimetallspirale 21 immer am Anschlag 29. Bei Heizkörpertemperaturen über 30 °C wird Wärme über die Wärmebrücke 22, den Anschlag 29 und den Wärmekontakt 27 auf die Bimetallspirale 21 geleitet. Das dadurch entstehende Drehmoment wirkt infolge der erfindungsgemässen Auslegung dem Drehmoment der Druckfeder 28 entgegen. Nach Wärmeaustausch der Bimetallspirale 21 auf 30 °C überwindet das Drehmoment der Bimetallspirale 21 das der Druckfeder 28 und sie bewegt sich in die andere Endlage am Anschlag 30. Dadurch erhält die Bimetallspirale 21 über die Wärmebrücke 23 Raumtemperatur, die in der Regel deutlich unter 30 °C liegt. Nach Wärmeaustausch der Bimetallspirale 21 auf nunmehr 30 °C überwindet ihr Drehmoment das der Druckfeder 28 in umgekehrter Richtung und der Wärmekontakt 27 bewegt sich in seine Ausgangslage am Anschlag 29 zurück. Der Vorgang wiederholt sich.

Die dadurch entstehende oszillierende Bewegung kann an geeigneter Stelle, beispielsweise am Wärmekontakt 27, ausgekoppelt und zum automatischen Aufzug des Federwerkes benutzt werden. Die Mittel zur Übertragung der Bewegungsenergie über ein Gesperre auf die Zugfeder eines Federwerks sind aus der Uhrwerkstechnik bekannt.

### Patentansprüche

1. Vorrichtung zur Bestimmung der Verteilung von Heiz- und Warmwasserkosten in zentral- oder fernbeheizten Gebäuden durch andauerndes Erfühlen eines zeitlichen Integrals der erfühlten Temperatur und Anzeigen dieses zeitlichen Temperaturintegrals mit einem mechanischen Temperaturfühler und zwei koaxial zur Mittelachse angeordneten, als Nockenscheiben wirkenden, relativ zueinander verdrehbaren Kulissenscheiben (4, 5), die jeweils an ihrem Umfang einen Abschnitt mit kleinerem Radius ($r4$, $r5$) aufweisen, die in Umfangsrichtung im Temperaturmessbereich eine gemeinsame temperaturabhängige Lücke zu bilden vermögen, sowie mit einer Abtastvorrichtung, die beim Einfallen in die Lücke eine Anzeigevorrichtung antreibt, dadurch gekennzeichnet, dass der grosse Radius (R5) der feststehenden Kulissenscheibe (5) merklich grösser ist als der grosse Radius (R4) der drehbaren Kulissenscheibe (4), und dass die Abtastvorrichtung (7, bis 10 und 18) wenigstens einen am Umfang der Kulissenscheiben (4, 5) federnd anliegenden, periodisch abtastenden Arm (7) aufweist, dass ferner zwischen der Abtastvorrichtung (7 bis 10 und 18) und einem Zählwerk eine Kopplungseinrichtung (11, 12) angeordnet ist, über die von der Abtastvorrichtung die Dauer des Zählervorlaufs pro Abtastperiode in der Weise steuerbar ist, dass die Abtastvorrichtung (7 bis 10 und 18) das Zählwerk nur freigibt, solange der Arm (7) der Abtastvorrichtung an dem Umfangsabschnitt beider Kulissenscheiben (4, 5) mit dem kleineren Radius ($r4$, $r5$) gleichzeitig anliegt, sonst aber das Zählwerk blockiert.

2. Vorrichtung nach Anspruch 1, dadurch gekennzeichnet, dass als mechanischer Temperaturfühler eine Bimetallspirale vorgesehen ist, die mit ihrem einen Ende mit einer Wärmebrücke (1) und mit ihrem anderen Ende mit einem frei beweglichen zylindrischen Gehäuse (6) verbunden ist, das an seinem äusseren Umfang die drehbare Kulissenscheibe (4) trägt.

3. Vorrichtung nach Anspruch 1 und 2, dadurch gekennzeichnet, dass der Arm (7) der Abtastvorrichtung (7–10 und 18) in der einen seiner beiden radial unterschiedlichen Lagen in ein Zahnrad (12) eines Zählwerkgetriebes eingreift, das koaxial mit den Kulissenscheiben (4, 5) angeordnet ist.

4. Vorrichtung nach Anspruch 1 und 2, dadurch gekennzeichnet, dass zum Messen einer Temperaturdifferenz ein zweiter gleichartiger Temperaturfühler vorgesehen ist, der starr mit einer dritten drehbaren Kulissenscheibe verbunden ist, die koaxial zu den beiden anderen Kulissenscheiben (4, 5) angeordnet ist, wie diese ebenfalls zwei Umfangsabschnitte mit unterschiedlichen Radien besitzt und ebenfalls durch den Arm (7) der Abtasteinrichtung (7–10 und 18) abtastbar ist.

5. Vorrichtung nach Anspruch 4, dadurch gekennzeichnet, dass für den zweiten Temperaturfühler (21) eine zwischen zwei Endstellungen umwechselnde Schnappschaltung vorgesehen ist, die in ihrer einen Endlage (29) auf die zu messende Temperatur anspricht und in ihrer anderen Endlage (30) auf die Raumtemperatur anspricht.

6. Vorrichtung nach Anspruch 5, dadurch gekennzeichnet, dass die Bimetallspirale (21) eines thermomechanischen Wandlers am inneren Ende ortsfest befestigt ist und am äusseren Ende einen Wärmekontakt (27) trägt, der zwischen zwei eine unterschiedliche Temperatur aufweisenden Anschlägen (29, 30) hin- und herbeweglich ist.

7. Vorrichtung nach Anspruch 6, dadurch gekennzeichnet, dass der Wärmekontakt (27) am Ende einer Druckfeder (28) angelenkt ist, deren anderes Ende an einem auf der Winkelhalbierenden des Schwenkwinkels des Wärmekontakts (2) liegenden Widerlager (31) befestigt ist.

8. Vorrichtung nach einem der Ansprüche 1–4, dadurch gekennzeichnet, dass auch der kleine Radius ($r_5$) der feststehenden Kulissenscheibe (5) merklich grösser ist als der kleine Radius ($r_4$) der am Temperaturfühler (2) befestigten Kulissenscheibe (4), so dass insgesamt die Beziehung $r_4 < r_5 < R_4 < R_5$ gilt.

9. Vorrichtung nach Anspruch 8, dadurch gekennzeichnet, dass die am Temperaturfühler (2) befestigte Kulissenscheibe (4) einen axialen Ansatz (17) der feststehenden Kulissenscheibe (5) mit geringerem radialen Spiel umgibt.

10. Vorrichtung nach Anspruch 1, dadurch gekennzeichnet, dass die Bimetallspirale (2) mit ihrem inneren Ende an der Wärmebrücke (1) befestigt ist und an ihrem äusseren Ende (3) die ihr zugehörige Kulissenscheibe (4) trägt.

11. Vorrichtung nach Anspruch 10, dadurch gekennzeichnet, dass die Kulissenscheibe (4) die Bimetallspirale (2) umgibt.

12. Vorrichtung nach Anspruch 10 oder 11, dadurch gekennzeichnet, dass die Bimetallspirale (2) in einem drehbaren zylindrischen Gehäuse (6) angeordnet ist, das auf dem Aussenmantel die erste Kulissenscheibe (4) trägt und am äusseren Ende (3) der Bimetallspirale (2) befestigt ist.

## Claims

1. Device for determining the distribution of heating and warm-water costs in buildings with central of district-heating systems by means of continuous sensing of a time integral of the reported temperatur and of the time integral of the temperature, with the aid of a mechanical temperature sensor and two slotted discs that can rotate with respect to each other and which are coaxially mounted with respect to the center axis and act as cam disks (4, 5) and which, on their circumferences, have sectors with smaller radii (r4, r5) and which, in the direction of their circumferences, are able to form a common slot that depends on the temperature, and by means of a sensing apparatus which, if it is incident on the slot, drives an indicator, characterized in that the large radius (R5) of the fixed slotted disc (5) is significantly larger than the large radius (R4) of the rotating slotted disc (4), and that the scanning apparatus (7 to 10, 18) is equipped with at least one periodically scanning arm (7) attached flexibly to the circumferences of the slotted discs (4, 5), and that, moreover, a coupling device (11, 12) is mounted between the scanning apparatus (7 to 10, 18) and a counting mechanism, the coupling device being able to control, through the scanning apparatus, the duration of the counter offset per scanning period in such a fashion that the scanning apparatus (7 to 10, 18) frees the counting mechanism only as long as the arm (7) of the scanning apparatus simultaneously touches the sectors on the circumferences of the slotted discs with the smaller radii (r4, r5), while blocking the counter otherwise.

2. Device according to Claim 1, characterized in that a bimetallic spiral is used as the mechanical temperature sensor, being connected at one end to a heat bridge (1) and at the other end to a freely movable cylindrical housing (6) carrying on its outer circumference the rotating slotted disc (4).

3. Device according to Claims 1 and 2, characterized in that the arm (7) of the scanning apparatus (7 to 10, 18) locks in one of its two radially different positions into a toothed wheel (12) of the gears of the counting mechanism, the attached wheel being arranged coaxially with the slotted discs (4, 5).

4. Device according to Claims 1 and 2, characterized in that a second similar temperature scanner is used to measure a temperature difference, this second scanner being connected rigidly to a third rotating slotted disc that in turn is arranged coaxially with respect to the other two slotted discs (4, 5) and that, in the same manner as the first two slotted discs, has two sectors of the circumference with different radii and that also can be scanned by the arm (7) of the scanning apparatus (7 to 10, 18).

5. Device according to Claim 4, characterized in that a snap switch is used for the second temperature sensor (21) which can alternate between two end positions, responding in one of the two end positions (29) to the temperature to be measured, in the other end (30) to room temperature.

6. Device according to Claim 5, characterized in that the bimetallic spiral (2) of a thermomechanical transducer has its interior end fastened at a fixed position, whereas the exterior end carries a heat contact (27) that may move between two positions (29, 30) that indicate different temperatures.

7. Device according to Claim 6, characterized in that the heat contact (27) is linked to the end of a pressure spring (28) whose other end is fastened to a counter support (31) positioned on the bisecting line of the arc of traverse of the heat contact (2).

8. Device according to Claims 1 to 4, characterized in that the small radius (r5) of the fixed slotted disc (5) is significantly larger than the small radius (r4) of the slotted disc (4) that is attached to the temperature sensor (2), with the result that the relation r4, r5, R4, R5 holds.

9. Device according to Claim 8, characterized in that the slotted disc (4) which is attached to the temperature sensor (2) surrounds, with very little radial play, and axial extension (17) of the stationary slotted disc (5).

10. Device according to Claim 1, characterized in that the bimetallic spiral (2) is attached, with its interior end, to the heat bridge (1), and with its exterior end (3) carries the corresponding slotted disc (4).

11. Device according to Claim 10, characterized in that the slotted disc (4) surrounds the bimetallic spiral (2).

12. Device according to Claims 10 and 11, characterized in that the bimetallic spiral (2) is arranged in a cylindrical housing (6) that is able to rotate and that carries on the exterior surface the first slotted disc (4) and that is attached to the exterior end (3) of the bimetallic spiral (2).

## Revendications

1. Dispositif pour déterminer la réparatition des coûts d'eau chaude dans des immeubles à chauffage central ou collectif par détection continuelle d'une intégrale en fonction du temps de la température détectée et affichage de cette intégrale de température en fonction du temps, comportant un capteur de température mécanique et deux disques coulissants (4, 5) pouvant tourner l'un par rapport à l'autre, jouant le rôle de disques à cames et disposés coaxialement à l'axe central, lesquels disques présentent à chaque fois, à leur périphérie, un segment de plus petit rayon (r4, r5), segments qui permettent de former, en direction périphérique dans la zone de mesure de température, un vide commun dépendant de la température, ainsi qu'un dispositif d'exploration qui, lors de l'entrée dans le vide, commande un dispositif d'affichage, caractérisé en ce que le grand rayon (R5) du disque coulissant fixe (5) est sensiblement plus grand que le grand rayon (R4) du disque coulissant rotatif (4), et en ce que le dispositif d'exploration (7 à 10 et 18) comporte au moins un bras (7) d'exploration périodique reposant élastiquement à la périphérie des disques coulissants (4, 5), en ce que, de plus, entre le dispositif d'exploration (7 à 10 et 18) et un compteur, est disposé un dispositif de couplage (11, 12), par l'intermédiaire duquel la durée de l'avance du compteur par période d'exploration est commandable par le dispositif d'exploration, de façon que le dispositif d'exploration (7 à 10 et 18) ne libère le compteur qu'aussi longtemps que le bras (7) du dispositif d'exploration repose en même temps contre les segments périphériques de plus petit rayon (r4, r5) des deux disques coulissants (4, 5), faute de quoi il bloque le compteur.

2. Dispositif selon la revendication 1, caractérisé en ce que, en tant que capteur de température mécanique, est prévue une spirale bimétallique, qui, par une de ses extrémités, est reliée à un pont thermique (1), et, par son autre extrémité, à un logement cylindrique librement mobile (6), qui porte à sa périphérie externe le disque coulissant rotatif (4).

3. Dispositif selon la revendication 1 et 2, caractérisé en ce que le bras (7) du dispositif d'exploration (7 à 10 et 18), dans une de ses deux positions radialement différentes, engrène avec une roue dentée (12) d'un compteur, qui est disposée coaxialement aux disques coulissants (4, 5).

4. Dispositif selon la revendication 1 et 2, caractérisé en ce que, pour mesurer une différence de température, est prévu un second capteur de température du même type, qui est relié rigidement à un troisième disque coulissant rotatif, qui est disposé coaxialement aux deux autres disques coulissants (4, 5), qui, comme ceux-ci, possède de même segments périphériques de rayons différents et, de même, peut être exploré par l'intermédiaire du bras (7) du dispositif d'exploration (7 à 10 et 18).

5. Dispositif selon la revendication 4, caractérisé en ce que, pour le second capteur de température (21), est prévu un interrupteur instantané mobile entre deux positions d'extrémité, qui, dans une de ses positions d'extrémité (29), réagit à la température à mesurer et, dans son autre position d'extrémité (30), réagit à la température ambiante.

6. Dispositif selon la revendication 5, caractérisé en ce que la spirale bimétallique (21) d'un convertisseur thermomécanique est fixée de façon stationnaire à l'extrémité interne et, à l'extrémité externe, porte un contact thermique (27), qui peut effectuer un mouvement de va-et-vient entre deux butées (29, 30) présentant une température différente.

7. Dispositif selon la revendication 6, caractérisé en ce que le contact thermique (27) est articulé à l'extrémité d'un ressort de pression (28), dont l'autre extrémité est fixée à une butée (31) se trouvant sur la bissectrice de l'angle de pivotement du contact thermique (2).

8. Dispositif selon l'une des revendications 1 à 4, caractérisé en ce qu'également le petit rayon ($r_5$) du disque coulissant fixe (5) est sensiblement plus grand que le petit rayon ($r_4$) du disque coulissant (4) fixé au capteur de température (2), de sorte qu'au total, il existe la relation: $r_4 < r_5 < R_4 < R_5$.

9. Dispositif selon la revendication 8, caractérisé en ce que le disque coulissant (4) fixé au capteur de température (2) entoure, avec un faible jeu radial, une saillie axiale (17) du disque coulissant fixe (5).

10. Dispositif selon la revendication 1, caractérisé en ce que la spirale bimétallique (2) est fixée par son extrémité interne au point thermique (1) et porte à son extrémité externe (3) le disque coulissant (4) correspondant.

11. Dispositif selon la revendication 10, caractérisé en ce que le disque coulissant (4) entoure la spirale bimétallique (2).

12. Dispositif selon la revendication 10 ou 11, caractérisé en ce que la spirale bimétallique (2) est disposée dans un logement cylindrique rotatif (6), qui porte sur son enveloppe externe le premier disque coulissant (4) et est fixé à l'extrémité externe (3) de la spirale bimétallique (2).

Fig.1

0 057 851

0 057 851

Fig.2

11

0 057 851

Fig. 3

13